# EUROPEAN PATENT APPLICATION

(11) **EP 4 640 453 A1**
(43) Date of publication of application: **29.10.2025**
(21) Application number: 25168885.9
(22) Date of filing: 07.04.2025
(51) Int. Cl.: B60H 1/00, B60H 1/03, B61D 27/00, F24F 1/06, F24F 12/00, B60H 1/32

(54) **COMPARTMENT, AIR-CONDITIONED VEHICLE, AND AIR-CONDITIONED BUILDING**

(30) Priority: 22.04.2024 IN 202411031886
(71) Applicant: ALSTOM Holdings, 93400 Saint-Ouen-sur-Seine (FR)
(72) Inventor: Tripathi, Rohit, 560093 Bengaluru (IN)
(74) Representative: Zimmermann & Partner Patentanwälte mbB

(57) **Abstract**

A compartment Z has an air-conditioning assembly for supplying supply air A1 into the compartment Z and drawing indoor air as extract air A2 out of the compartment Z. The air-conditioning assembly is configured so that a portion of the extract air A2 is discharged as exhaust air A22 and another portion of the extract air A2 is returned to the compartment Z as recirculation air A21, which is mixed with outdoor air A11 drawn from the outside of the compartment Z and supplied as supply air A1. The air-conditioning assembly includes an air-conditioning unit 13 and an air guiding means 14. The air-conditioning unit 13 includes a housing 130 having an ambient air inlet 131 and a heat exchanger 132 located inside the housing 130. The air guiding means 14 is used for guiding the exhaust air A22 from the compartment Z to a space S1 inside the housing 130 between the ambient air inlet 131 and the heat exchanger 132 for mixing the exhaust air A22 with an ambient air A3 from outside the compartment such that a flow of mixed air A3' composed of the ambient air A3 and the exhaust air A22 is supplied to the heat exchanger 132 of the air-conditioning unit 13.

## Description

### TECHNICAL FIELD

The present invention relates to a compartment, an air-conditioned vehicle, and an air-conditioned building, more particularly, to a compartment, an air-conditioned vehicle having at least one compartment, and an air-conditioned building having at least one room forming the compartment with an air-conditioning assembly possessing enhanced energy efficiency.

### BACKGROUND

A heating, ventilation, and air-conditioning (HVAC) system controls the temperature, humidity, and purity of the air in an enclosed space. An HVAC system generally includes a ventilation unit and an air-conditioning unit. The ventilation unit replaces air in the enclosed space by drawing out indoor air and supplying fresh air into the enclosed space of an interior compartment. By doing so, impurities in the indoor air, e.g. odours, carbon dioxide, bacteria, which may reduce occupants' comfort, can be replaced by fresh air and oxygen can be replenished. An air-conditioning unit typically utilizes a heat transfer medium circulating in a refrigeration cycle containing a compressor, an evaporator, a condenser, and an expansion valve. Depending on the specific configuration of the air-conditioning unit, the air-conditioning unit can function as cooling unit to cool an interior compartment by removing heat from indoors to outdoors, or as a heating unit to heat the interior compartment. For example, when configured as cooling unit, the heat transfer medium absorbs heat from the indoor air at the evaporator, and releases the heat to the outdoor air at the condenser.

In the refrigeration cycle, the evaporator and the condenser are often equipped with a fan. The evaporator fan blows indoor ambient air towards the evaporator coil, where heat is removed from the indoor ambient air by evaporation of the heat transfer medium flowing through the evaporating coil, and the thus cooled indoor ambient air is blown back into the enclosed space of the compartment. The condenser fan blows outdoor ambient air over the condenser coil, which cools the heat transfer medium inside the condenser coil, which transfer medium will eventually condense. In case of variable climates, the refrigeration cycle can be reversed so that it switches from cooling to heating the enclosed space, or vice versa.

The temperature difference between the temperature of the outdoor ambient air and the target indoor temperature affects the efficiency of the refrigeration cycle. Specifically, the condensing temperature of a condenser, i.e. the saturation temperature at which the heat transfer medium inside the condenser changes from vapor to liquid, increases as the ambient temperature increases. Consequently, the coefficient of performance (COP) of the air-conditioning unit decreases as the ambient temperature increases, since the refrigeration capacity decreases and the compressor power is increased with the increase in the condensing temperature. As a result, in regions with scorching summers, the HVAC system may have a low energy efficiency.

For example, the passenger space of vehicles needs to be conditioned by a HVAC system. Examples for vehicles with HVAC systems are disclosed in CN 209 159 704 U and CN 216 139 987 U.

In view of the above, there is need for improvement in conventional HVAC systems.

### BRIEF DESCRIPTION OF THE INVENTION

The above problem is solved by a compartment according to claim 1, by an air-conditioned vehicle according to claim 10, and by an air-conditioned building according to claim 12. Further embodiments, modifications, aspects and advantages are disclosed in the dependent claims and the following description.

According to an embodiment, which can be combined with any other embodiment described herein, a compartment is provided. The compartment has an associated air-conditioning assembly for supplying supply air into the compartment and drawing indoor air as extract air out of the compartment. The air-conditioning assembly is configured so that a portion of the extract air is discharged as exhaust air and another portion of the extract air is returned to the compartment as recirculation air, which is mixed with outdoor air drawn from the outside of the compartment and supplied as supply air. The air-conditioning assembly includes an air-conditioning unit an air guiding means. The air-conditioning unit includes a housing having an ambient air inlet, a heat exchanger located inside the housing, and an outlet fan for generating an air flow from the ambient air inlet through the housing and out of the housing through a housing outlet. The air guiding means is adapted to guide the exhaust air from the compartment to a space inside the housing between the ambient air inlet and the heat exchanger for mixing the exhaust air with an ambient air drawn through the ambient air inlet from the outside of the compartment such that a flow of mixed air composed of the ambient air, drawn through the ambient air inlet, and the exhaust air is supplied to the heat exchanger of the air-conditioning unit by operating the outlet fan.

With the air guiding means, the exhaust air to be discharged out of the compartment can be used to cool the ambient air by mixing the exhaust air with the ambient air. For example, in the case where the air-conditioning unit is used to cool the compartment, i.e. the heat exchanger operates as a condenser, the mixed air, which is at a temperature lower than the outdoor ambient air, is used to cool the heat exchange medium inside the condenser. Compared to a conventional air-conditioning unit where the exhaust air is directly discharged out of the compartment and the outdoor ambient air is used to cool the heat exchanger, the present embodiment achieves a higher energy efficiency by utilizing the exhaust air to cool the ambient air before the exhaust air is discharged, thereby lowering the condensing temperature of the condenser.

The ambient air, drawn through the ambient air inlet, and the exhaust air are efficiently mixed prior to flow to the heat exchanger. Beneficial for achieving this is the mixing between ambient air and exhaust air within the housing of the air-conditioning unit into which both the exhaust air and the ambient air are guided. Mixing within the housing contributes to a spatially homogeneous mixing. For example, if the heat exchanger operates as condenser, the mixed air is used to cool the condenser. It is believed that a spatially substantially homogeneously mixed air, which come into contact with the condenser, can cool the condenser more efficiently than an inhomogeneously mixed air.

According to an embodiment, which can be combined with any other embodiment described herein, by operating the outlet fan, air from within the housing is sucked and blown to the outside. The outlet fan generates a flow of air from the ambient air inlet, through the space where mixing with the exhaust air takes place, through the heat exchanger to the housing outlet.

The air guiding means may be configured to distribute the exhaust air within the space to facilitate a substantial uniform spatial mixing with the ambient air drawn through the ambient air inlet. For example, the air guiding means may extend within and through the space inside the housing between the ambient air inlet and the heat exchanger and may have a plurality of openings or perforations along the length of the air guiding means through which the exhaust air can flow out of the air guiding means for mixing.

According to an embodiment, which can be combined with any other embodiment described herein, the air-conditioning assembly further comprises at least one exhaust air supply grille provided in the housing between the ambient air inlet and the heat exchanger to distribute the exhaust air within the space.

The exhaust air supply grille may be configured to distribute the exhaust air within the housing to facilitate homogeneous mixing with the ambient which is drawn through the ambient air inlet. The exhaust air supply grille may be part of the air guiding means which extends through the housing along a direction so that the exhaust air flows out of the air guiding means, i.e. the exhaust air supply grille, at spatially different locations within the housing. The exhaust air supply grille may form an internal part of the air guiding means within the housing.

According to an embodiment, which can be combined with any other embodiment described herein, the exhaust air supply grille has a tube-shaped structure with a tube end connected to the air guiding means. The tube-shaped structure defines a mixing space in which a major part of the exhaust air directed by the air guiding means from the compartment and the ambient air is mixed to form a flow of mixed air. With a tube end connected to the air guiding means, the exhaust air supply grille receives the exhaust air guided by the air guiding means and also receives a flow of ambient air in the mixing space of the tube-shaped structure, where a mixed air is formed. Since the exhaust air and the flow of ambient air are confined in and distributed over the mixing space, the rate of achieving a homogeneous mixture between the exhaust air and the ambient air can be increased.

According to an embodiment, which can be combined with any other embodiment described herein, the exhaust air supply grill, particularly the tube-shaped structure, includes a plurality of perforations for allowing the flow of ambient air from outside the compartment into the mixing space, and allowing the flow of mixed air from the mixing space to the heat exchanger. In a perforated tube-shaped structure, the flow of ambient air and the exhaust air are to a great extent contained inside the mixing space, hence achieving a high mixing efficiency. The perforated tube-shaped structure also permits the flow of mixing air to reach a higher homogeneous level before leaving the mixing space.

According to an embodiment, which can be combined with any other embodiment described herein, the perforations are arranged offset to each other. The perforations being offset to each other helps the flow of ambient air to be evenly distributed inside the mixing space, thereby enhancing the mixing efficiency of the mixture between the ambient air and the exhaust air. The offset arrangement of perforations also allows the flow of mixing air to evenly arrive at the heat exchanger.

According to one embodiment, which can be combined with any other embodiment described herein, a plurality of the exhaust air supply grilles is arranged side by side along a first direction, and each of the exhaust air supply grilles extends along a second direction perpendicular to the first direction. In this embodiment, the ambient air inlet has an opening width larger than the diameter of the tube-shaped structure of the exhaust air supply grille. The opening width expands along the first direction. Having a plurality of the exhaust air supply grilles arranged along the first direction ensures that most of the ambient air flowing into the ambient air inlet enters the mixing space of the exhaust air supply grilles, thereby enhancing the mixing efficiency of the exhaust air supply grilles.

According to one embodiment, which can be combined with any other embodiment described herein, the air guiding means includes an air collecting box, a duct, and a fan module. The air collecting box is connected between the compartment and the duct. The fan module is disposed in the air collecting box and adapted to force the exhaust air from the compartment towards the duct. Due to its box shape, the air collecting box stops the exhaust air from flowing towards directions other than the direction towards the duct, thereby directing the exhaust air towards the duct. The air-collecting box, the duct together with the fan module facilitate the transportation of exhaust air from the compartment to the housing of the air-conditioning unit. The exhaust air supply grille may be considered to be an extension of the duct within the housing.

According to one embodiment, which can be combined with any other embodiment described herein, the compartment further comprises a first outlet for drawing from the compartment the portion of the extract air to be discharged as exhaust air, and a second outlet for drawing from the compartment the other portion of the extract air to be returned as recirculation air. The amount of extract air to be discharged as exhaust air is preferably equal to the amount of outdoor air drawn from the outside of the compartment so as to maintain a desired pressure level in the compartment. With two separate outlets respectively drawing the portion of extract air to be exhausted and the portion to be recirculated back to the compartment, the ratio of the recirculation air to the exhaust air can be maintained efficiently.

According to one embodiment, which can be combined with any other embodiment described herein, the air-conditioning unit further comprises a further heat exchanger, a compressor and an expansion valve which are included, together with the heat exchanger, in a circulation pipe, wherein one of the heat exchanger and the further heat exchanger functions as evaporator and the other one of the heat exchanger and the further heat exchanger functions as condenser.

According to one embodiment, which can be combined with any other embodiment described herein, an air-conditioned vehicle is provided. The air-conditioned vehicle has at least one compartment mentioned above. According to an embodiment, which can be combined with any other embodiment described herein, the vehicle is a railway vehicle.

According to one embodiment, which can be combined with any other embodiment described herein, an air-conditioned building is provided. The air-conditioned building has at least one room forming the compartment as mentioned above.

### FIGURES

The invention will now be described with reference to embodiments without limiting the scope as defined by the claims.

The appending drawings illustrate embodiments and serve in combination with the description for explaining the principles of the invention. Elements in the drawings are relative to each other and are not necessary to scale unless otherwise stated.
Figure 1 shows a side view of an air-conditioned vehicle according to an embodiment.
Figure 2 shows a functional diagram of a compartment according to an embodiment.
Figure 3 shows a top view of the compartment in Figure 1.
Figure 4 shows a cross-section view of the air-conditioning assembly of Figure 3 along line AA according to an embodiment.
Figure 5 shows a cross-section view of an air-conditioning assembly of Figure 3 along AA according to another embodiment.
Figure 6A shows a perspective view of an exhaust air supply grille according to an embodiment.
Figure 6B shows a perspective view of a plurality of exhaust air supply grilles according to an embodiment.

### DETAILED DESCRIPTION

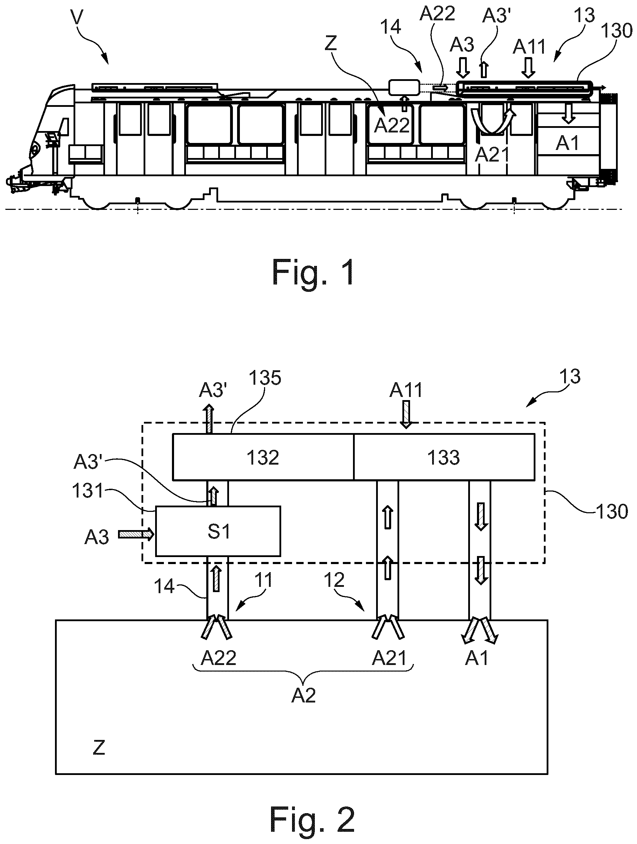

Figure 1 illustrates an air-conditioned vehicle V, such as a rail vehicle, with at least one compartment Z according to an embodiment. The compartment Z may be the passenger compartment, for example of a commuter train, a high-speed train, an urban train or a metro without being limited thereto. Figure 2 shows a functional diagram illustrating a compartment Z according to an embodiment. With reference to Figures 1 and 2, the compartment Z has an associated air-conditioning assembly for supplying supply air A1 into the compartment Z and drawing indoor air as extract air A2 out of the compartment Z. The air-conditioning assembly is configured so that a portion of the extract air A2 is discharged as exhaust air A22 and another portion of the extract air A2 is returned to the compartment Z as recirculation air A21. The recirculation air A21 is mixed with outdoor air A11 drawn from the outside of the compartment Z and supplied as supply air A1 to the compartment Z. The exhaust air A22 is mixed with ambient air A3 to form mixed air A3' and guided through a heat exchanger before being discharged.

An air-conditioning unit typically contains two heat exchangers, i.e. a condenser and an evaporator connected by a circulation pipe through which a heat transfer medium flows. In a refrigeration cycle, i.e. when the air-conditioning unit is used for cooling the compartment Z, the evaporator transfers heat out of the conditioned air (recirculation air A21 and supply air A1) to the heat transfer medium, and at the condenser this heat is transferred out of the heat transfer medium to the outdoor ambient air. The refrigeration cycle can be reversed when the air-conditioning unit is used for heating. With reference to Figure 2, in the present embodiment, the air-conditioning unit 13 is used for cooling the compartment Z, and includes the heat exchanger 132 as a condenser, and the heat exchanger 133 as an evaporator. Accordingly, in the present embodiment, the heat exchanger 133 works to transfer heat from the recirculation air A21, and the heat exchanger 132 serves to transfer this heat from the recirculation air A21 carried by the heat transfer medium to the outdoor ambient air A3. In practice, the recirculation air is usually mixed with the outdoor air before being sent to the evaporation. However, the present invention is not limited thereto; in other embodiments, wherein the air-conditioning unit 13 is used for heating the compartment Z, the heat exchanger 132 can work as an evaporator with the heat exchanger 133 working as a condenser.

With reference to Figures 1, 2, 3 and 4, the air-conditioning assembly includes an air-conditioning unit 13 and an air guiding means 14. The air-conditioning unit 13 includes a housing 130 having an ambient air inlet 131 and the heat exchanger 132, in the present embodiment serving as condenser, located inside the housing 130. The air guiding means 14 guides the exhaust air A22 from the compartment Z to a space S1 within the housing 130 between the ambient air inlet 131 and the heat exchanger 132 for mixing the exhaust air A22 with an ambient air A3 from the outside of the compartment Z though the ambient air inlet 131 such that a flow of mixed air A3' composed of the ambient air A3 and the exhaust air A22 is supplied to the heat exchanger 132 of the air-conditioning unit 13.

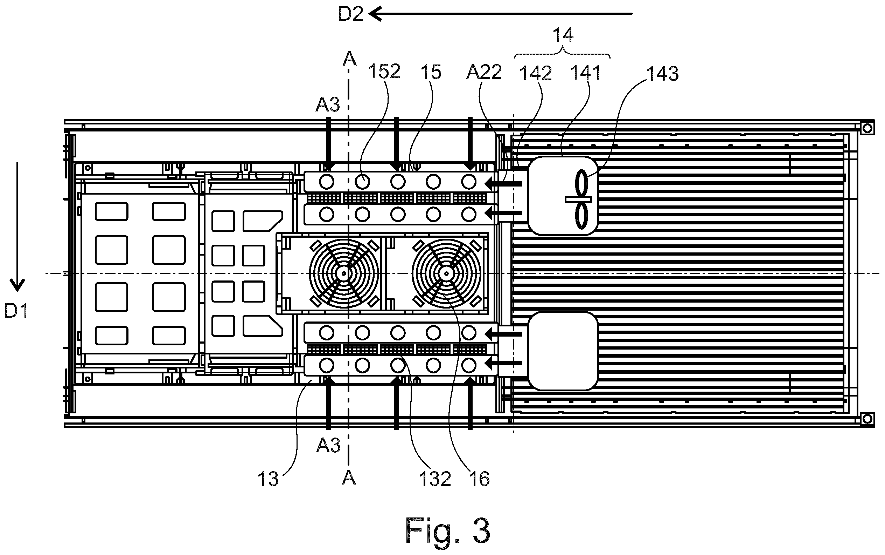

In the present embodiment, with the aid of the condenser fan 16, which is an example of an outlet fan of the housing 130, as shown in Figure 3, a flow of ambient air A3 outside the compartment Z enters the housing 130 through the ambient air inlet 131. This ambient air A3 is at a higher temperature than the air inside the compartment Z, i.e. higher than the temperature of the exhaust air A22. With the air guiding means 14 provided in the present embodiment, the exhaust air A22 drawn from the compartment Z is guided to the space S1 between the ambient air inlet 131 and the heat exchanger 132 before being discharged out of the compartment Z. This allows the ambient air A3 to be cooled by being mixed with the exhaust air A22. The mixed air A3' at a lower temperature than the ambient air A3 then flows to the heat exchanger 132 to cool the heat exchange medium inside the heat exchanger 132. In this manner, the condensing temperature of the heat exchanger 132 can be lowered as compared to prior art air-conditioners, wherein a condenser is directly cooled by the ambient air.

For example, the condenser fan 16 arranged next to a housing outlet 135 sucks air from within the housing 130 and thereby draws the ambient air A3 and the exhaust air A22 into the housing 130. It is noted that the internal space S1 where the mixing between the ambient air A3 and the exhaust air A22 takes place and where the flow of the mixed air A3 occurs is separated from other internal spaces of the housing 130, specifically an inter space where the evaporator 133 is arranged.

Energy efficiency is an important consideration in the design of air-conditioning unit. In order to meet a minimum coefficient of performance (COP) requirement, a certain temperature difference between the condensing temperature and the outdoor ambient temperature has to be met. This temperature difference requirement depends on the size of the air-conditioning unit, which affects the cooling capacity, and the relative humidity. Therefore, in regions with scorching summers, it can be difficult to reach a minimum COP requirement because the ambient air is very hot, which increases the condensing temperature and therefore lowers the energy efficiency of the air-conditioning unit. In certain applications, e.g. public transport vehicles, the required temperature difference can be hard to achieve due to size constraint of the air-conditioning unit. Hence, in the present embodiment, by providing the air-guiding means 14 guiding the exhaust air A22 to the space S1 between the ambient air inlet 131 and the heat exchanger 132 to cool the ambient air A3, the compartment Z according to the present embodiment achieves an enhanced energy efficiency due to reduced ambient air temperature.

Further referring to Figure 2, in the present embodiment, the compartment Z has a first outlet 11 for drawing the exhaust air A22 from the compartment Z, and a second outlet 12 for drawing the recirculation air A21 from the compartment Z. Providing separate outlets for respectively drawing extract air A2 of different purposes allows an easy control of the ratio between the exhaust air A22 and the recirculation air A21. Specifically, the amount of extract air A2 to be discharged as exhaust air A22 preferably equals to the amount of outdoor air A11 drawn from the outside of the compartment Z so as to maintain a desired pressure level in the compartment Z. For example, in one embodiment, the supply air A1 is composed of 70% of recirculation air A21 and 30% of outdoor air A11. In this case, the amount of extract air A2 drawn by the first outlet 11 to be discharged as exhaust air A22 and the amount of extract air A2 drawn by the second outlet 12 to be returned to the compartment Z is controlled to maintain at the ratio of 3:7. However, the present invention is not limited thereto. The desired ratio can be adjusted according to actual conditions. Providing separate outlets for exhaust air A22 and recirculation air A21 also allows this ratio to be changed easily.

Different outlets for the exhaust air A22 and the recirculation air A21 is also beneficial for providing short ducts from the respective outlets to the condenser 132 and the evaporator 133, respectively, as both units can be quite large. Short ducts have a lower the flow resistance than, for example, a single duct branching into two ducts one for guiding the extract air A2, as exhaust air A22 to the condenser 132 and one to the evaporator 133.

The air guiding means 14 not only guide the exhaust air A22 to the housing 130 but also contributes to the efficient mixing of the exhaust air A22 with the ambient air A3. The air guiding means 14 may extend within the housing 130 and are configured to release, or distribute, the exhaust air A22 at a plurality of different locations for facilitating a spatially uniform mixing.

With reference to Figures 1 and 3, according to an embodiment, the air guiding means 14 includes an air collecting box 141, a duct 142, and an optional fan module 143. The air collecting box 141 is connected between the compartment Z and the duct 142. The fan module 143 is disposed in the air collecting box 141 and adapted to force the exhaust air A22 from the compartment Z towards the duct 142. In the present embodiment, the air collecting box 141 is in a rectangular cuboid shape. However, the present invention is not limited thereto. In other embodiments, the air collecting box 141 can be in other shapes adapted to stop the exhaust air A22 from the compartment Z from flowing in directions other than the direction towards the duct 142.

The air collecting box 141 is connected to the first outlet 11, i.e. the exhaust air cut-out of the compartment Z, and has one of its lateral sides connected to the duct 142. The duct 142 is connected between the air collecting box 141 and the housing 130 of the air-conditioning unit 13, with the opening of the duct 142 facing the space S1 between the ambient air inlet 131 and the heat exchanger 132.

The air collecting box 141 restricts the movement of the exhaust air A22 such that the exhaust air A22 is only free to flow towards the duct 142, thereby directing the exhaust air A22 towards the duct 142. According to the present embodiment, the fan module 143 is preferably mounted on an inner sidewall of the air collecting box 141 facing the duct 142 so as to force the exhaust air A22 towards the duct 142. The air collecting box 141, the duct 142 and the fan module 143 facilitate the transportation of exhaust air A22 from the compartment Z to the housing 130 of the air-conditioning unit 13, and more specifically to the space S1 between the ambient air inlet 131 and the heat exchanger 132.

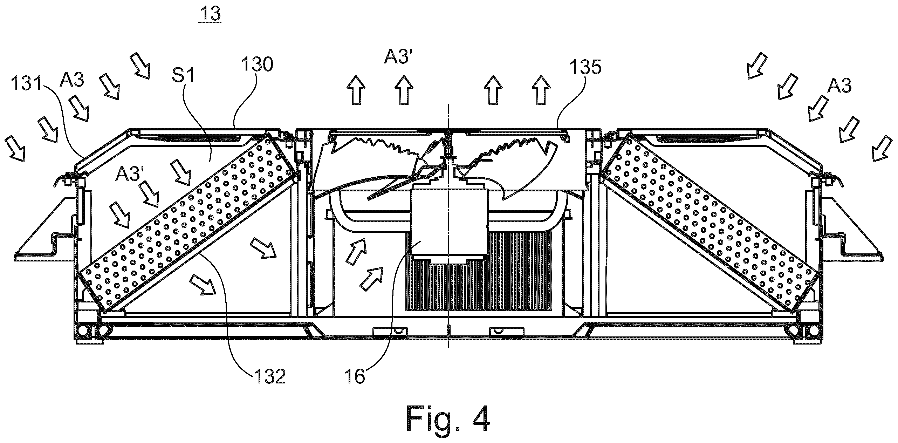

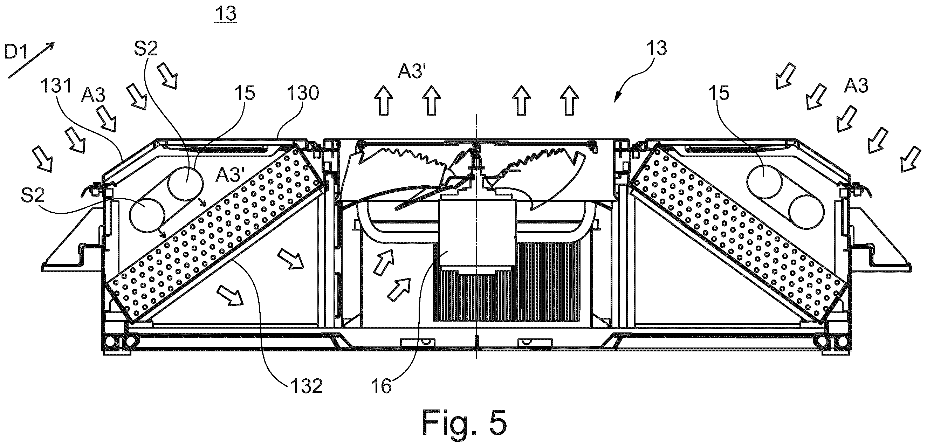

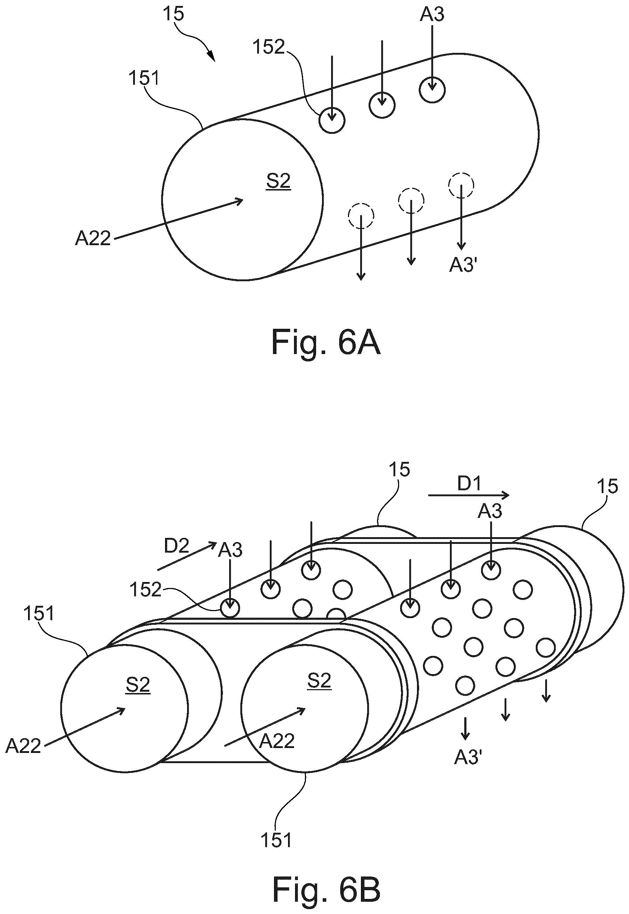

With reference to Figures 3, **4****,** 5, 6A and 6B, according to an embodiment, the air-conditioning assembly further includes at least one exhaust air supply grille 15 provided in the housing 130 between the ambient air inlet 131 and the heat exchanger 132. Specifically, Figure 4 shows the cross-section view of Figure 3 along line AA, with the exhaust air supply grilles 15 shown in Figure 3 removed to illustrate an embodiment without the exhaust air supply grilles 15; Figure 5 shows the cross-section view of Figure 3 along line AA with the exhaust air supply grilles 15 to illustrate another embodiment with the exhaust air supply grilles 15 being provided. Figures 3 and 5 show an embodiment in which two exhaust air supply grilles 15 are provided, which is implemented as a dual exhaust air supply grille module as shown in Figure 6B. However, the present invention is not limited thereto. In other embodiments, one single exhaust air supply grille 15 as shown in Figure 6A can also be disposed in the housing 130 between the ambient air inlet 131 and the heat exchanger 132, depending on needs. It is noted that the exhaust air supply grilles 15 shown in Figure 3 are arranged within the housing 130. Only for illustration purposes and for clarifying their extension, the exhaust air supply grilles 15 have been drawn as they would be arranged above the ambient air inlet 131. In fact, the exhaust air supply grilles 15 are arranged below the ambient air inlet 131 as it becomes clear from Figure 5.

The exhaust air supply grille 15 has a tube-shaped structure with a tube end 151 connected to the air guiding means 14. The tube-shaped structure defines a mixing space S2 in which the exhaust air A22 directed by the air guiding means 14 from the compartment Z and the ambient air A3 is mixed to form the flow of mixed air A3'.

Since the exhaust air supply grille 15 has a tube-shaped structure with a tube end 151 connected to the air guiding means 141, the exhaust air A22 guided by the air guiding means 14 is routed directly into the mixing space S2 of the tube-shaped structure where a flow of ambient air A3 is also received by the exhaust air supply grille 15. In this manner, the exhaust air A22 and the ambient air A3 can be confined in and distributed over the mixing space S2. While a small part of the exhaust air A22 and the ambient air A3 may flow out of the mixing space S2 before mixing with each other, and mix instead in the space S1, a major part of the exhaust air A22 and the ambient air A3 are mixed with each other inside the mixing space S2 due to the confining and distributing function of the tube-shaped structure of the exhaust air supply grille 15. In this way, the rate of achieving a homogeneous mixture can be increased.

The exhaust air supply grille 15 can be implemented as a grille tube, i.e. the tube wall of the tube-shaped structure is composed of a framework of metal bars as in a conventional air conditioner grille. However, the present invention is not limited thereto. For example, according to the embodiment shown in Figures 3, 6A and 6B, the tube-shaped structure of the exhaust air supply grille 15 includes a plurality of perforations 152 for allowing the flow of ambient air A3 from the outside of the compartment Z into the mixing space S2, and allowing the flow of mixed air A3' from the mixing space S2 to the heat exchanger 132. In a perforated tube-shaped structure, the flow of ambient air A3 and the exhaust air A22 are to a greater extent contained in the mixing space S2, hence achieving a higher mixing efficiency. The perforated tube-shaped structure also permits the flow of mixing A3' air to reach a higher homogeneous level before leaving the mixing space S2.

Referring to Figure 6B, according to an embodiment, the perforations 152 on the tube-shaped structure can be arranged offset to each other. This offset arrangement generates a diffuse distribution pattern of perforations 152, allowing the flow of ambient air A3 to be evenly distributed inside the mixing space S2, thereby enhancing the mixing efficiency of the mixture between the ambient air A3 and the exhaust air A22. The offset arrangement of perforations 152 also allows the flow of mixing air A3' to evenly arrive at the heat exchanger 132, thereby improving the heat transfer efficiency at the heat exchanger 132.

With reference to Figures 3, 5 and 6B, as mentioned above, a plurality of exhaust air supply grilles 15 can be disposed in the housing 130 between the ambient air inlet 131 and the heat exchanger 132. Specifically, according to an embodiment, a plurality of the exhaust air supply grilles 15 are arranged side by side along a first direction D1. Each of the exhaust air supply grilles 15 extends along a second direction D2 perpendicular to the first direction D1. In this embodiment, the ambient air inlet 131 has an opening width larger than the diameter of the tube-shaped structure of the exhaust air supply grille 15. The opening width expands along the first direction D1. In the case where the opening width is larger than the diameter of the tube-shaped structure of the exhaust air supply grille 15, having a plurality of the exhaust air supply grilles 15 arranged along the first direction D1 ensures that most of the ambient air A3 flowing into the ambient air inlet 131 enters the mixing space S2 of the exhaust air supply grilles 15 to be mixed with the exhaust air A22 without escaping to the space S1 outside the exhaust air supply grille 15, thereby enhancing the mixing efficiency between the exhaust air A22 and the ambient air A3.

According to an embodiment, the compartment Z shown in Figure 2 is used in an air-conditioned building (not shown in the Figures). The air-conditioned building has at least one room forming the compartment Z as mentioned above. In this way, the energy efficiency consumed by the air-conditioning assembly of the at least one room, and hence the energy efficiency of the air-conditioned building can be enhanced.

In summary, the embodiments of the present invention provide a compartment, an air-conditioned vehicle and an air-conditioned building, wherein by using an air guiding means guiding the exhaust air from the compartment to a space inside the housing between the ambient air inlet and the heat exchanger, the exhaust air can be mixed with an ambient air from the outside of the compartment such that a flow of mixed air composed of the ambient air and the exhaust air is supplied to the heat exchanger of the air-conditioning unit, thereby enhancing the energy efficiency of the air-conditioning unit.

Although specific embodiments are illustrated and described herein, the skilled person will appreciate that the embodiments can be modified without departing from the scope as defined by the claims.

### LIST OF REFERENCE NUMBERS

- V: air-conditioned vehicle
- Z: compartment
- 11: first outlet
- 12: second outlet
- 13: air-conditioning unit
- 130: housing
- 131: ambient air inlet
- 132, 133: heat exchanger
- 135: housing outlet
- 14: air guiding means
- 141: air collecting box
- 142: duct
- 143: fan module
- 15: exhaust air supply grille
- 151: tube end
- 152: perforation
- 16: condenser fan
- A1: supply air
- A11: outdoor air
- A2: extract air
- A21: recirculation air
- A22: exhaust air
- A3: ambient air
- A3': mixed air
- S1: space
- S2: mixing space
- D1: first direction
- D2: second direction

## Claims

1. A compartment (Z) with an associated air-conditioning assembly for supplying supply air (A1) into the compartment (Z) and drawing indoor air as extract air (A2) out of the compartment (Z), the air-conditioning assembly being configured so that a portion of the extract air (A2) is discharged as exhaust air (A22) and another portion of the extract air (A2) is returned to the compartment (Z) as recirculation air (A21), which is mixed with outdoor air (A11) drawn from the outside of the compartment and supplied as supply air (A1), the air-conditioning assembly comprising:
an air-conditioning unit (13) comprising a housing (130) having an ambient air inlet (131), a heat exchanger (132) located inside the housing (130), and an outlet fan (16) for generating an air flow from the ambient air inlet (131) through the housing (130) and out of the housing (130) through a housing outlet (135); and
an air guiding means (14) for guiding the exhaust air (A22) from the compartment (Z) to a space (S1) inside the housing (130) between the ambient air inlet (131) and the heat exchanger (132) for mixing the exhaust air (A22) with ambient air (A3) drawn through the ambient air inlet (131) from the outside of the compartment such that a flow of mixed air (A3') composed of the ambient air (A3), drawn through the ambient air inlet (131), and the exhaust air (A22) is supplied to the heat exchanger (132) of the air-conditioning unit (13) by operating the outlet fan (16).

2. The compartment (Z) according to claim 1, wherein the air-conditioning assembly further comprises at least one exhaust air supply grille (15) provided in the housing (130) between the ambient air inlet (131) and the heat exchanger (132) to distribute the exhaust air (A22) within the space (S1).

3. The compartment (Z) according to claim 2, wherein the exhaust air supply grille (15) has a tube-shaped structure with a tube end (151) connected to the air guiding means (14), the tube-shaped structure defining a mixing space (S2) in which the exhaust air (A22) directed by the air guiding means (14) from the compartment (Z) and the flow of ambient air (A3) is mixed to form the flow of mixed air (A3').

4. The compartment (Z) according to claim 2 or 3, wherein the exhaust air supply grille (15), particularly the tube-shaped structure, includes a plurality of perforations (152) for allowing the flow of ambient air (A3) from outside the compartment (Z) into the mixing space (S2), and allowing the flow of mixed air (A3') from the mixing space (S2) to the heat exchanger (132).

5. The compartment (Z) according to claim **4,** wherein the perforations (152) are arranged offset to each other.

6. The compartment (Z) according to any one of claims 2 to 5, wherein a plurality of the exhaust air supply grilles (15) are arranged side by side along a first direction (D1), and each of the exhaust air supply grilles (15) extends along a second direction perpendicular to the first direction (D2).

7. The compartment (Z) according to any one of the previous claims, wherein the air guiding means (14) includes an air collecting box (141), a duct (142), and a fan module (143), the air collecting box (141) being connected between the compartment (Z) and the duct (142), the fan module (143) being disposed in the air collecting box (141) and adapted to force the exhaust air (A22) from the compartment (Z) into the mixing space (S2) through the duct (142).

8. The compartment (Z) according to any one of the previous claims, further comprising a first outlet (11) for drawing, from the compartment (Z), the portion of the extract air (A2) to be discharged as exhaust air (A22), and a second outlet (12) for drawing, from the compartment (Z), the other portion of the extract air (A2) to be returned as recirculation air (A21).

9. The compartment (Z) according to any one of the previous claims, wherein the air-conditioning unit (13) further comprises a further heat exchanger, a compressor and an expansion valve which are included, together with the heat exchanger (132), in a circulation pipe, wherein one of the heat exchanger (132) and the further heat exchanger functions as evaporator and the other one of the heat exchanger (132) and the further heat exchanger functions as condenser.

10. An air-conditioned vehicle having at least one compartment (Z) according to any of the preceding claims.

11. The air-conditioned vehicle of claim 10, wherein the air-conditioned vehicle is a railway vehicle.

12. An air-conditioned building having at least one room forming the compartment (Z) according to any of the preceding claims.
